# FASCICULE DE BREVET EUROPEEN

(11) **EP 0 989 007 B1**
(45) Date de publication et mention de la délivrance du brevet: **22.06.2005**
(21) Numéro de dépôt: 99402307.5
(22) Date de dépôt: 21.09.1999
(51) Int. Cl.: B60J 5/04

(54) **Dispositif formant renfort de porte pour véhicule automobile**
Türverstärkungsvorrichtung für Kraftfahrzeug
Reinforcement device for door of motor vehicle

(30) Priorité: 24.09.1998 FR 9811952
(43) Date de publication de la demande: 29.03.2000
(73) Titulaire: AUTOMOBILES PEUGEOT, 75116 Paris (FR); AUTOMOBILES CITROEN, 92200 Neuilly-sur-Seine (FR)
(72) Inventeur: Guerteau, Frédéric, 78360 Montesson (FR)
(74) Mandataire: Thinat, Michel

(56) Documents cités:
- EP-A- 0 613 798
- DE-A- 4 236 229
- DE-A- 4 423 741
- FR-A- 1 417 185
- US-A- 4 702 040
- US-A- 5 599 057
- US-A- 5 787 645

## Description

La présente invention concerne un dispositif formant renfort de porte pour véhicule automobile et destiné à transmettre des efforts en cas de choc frontal du véhicule.

Des dispositifs ont déjà été proposés dans ce but et comprennent un profilé raidisseur sensiblement horizontal fixé sur le panneau intérieur de la porte, à la partie supérieure de ce panneau située sensiblement au niveau de la partie inférieure de l'encadrement de la vitre où se trouvent les joints lécheurs d'essuyage de la vitre lors de la descente de celle-ci.

Ce profilé raidisseur constitue ainsi une entretoise reliant le pied avant et le pied milieu du véhicule afin de limiter la déformation du côté de l'habitacle en cas de choc frontal.

Cependant, le pied milieu a une section relativement faible à ce niveau et il a tendance à se vriller en cas de choc sous la poussée du profilé raidisseur car les faces en contact sont inclinées par rapport à la direction transversale du véhicule. En outre, la partie arrière du profilé raidisseur se trouve au niveau de la serrure et de la gâche de fermeture de la porte, qui sont fortement sollicitées et risquent de se rompre, de sorte qu'il y a un risque d'ouverture inopinée de la porte en cas de choc frontal.

On connaît également par le document FR-A-1 417 185 une porte de véhicule comprenant une armature présentant une résistance mécanique propre et suffisante pour absorber l'ensemble des efforts à appliquer aux charnières et à la serrue et ayant la forme d'un V ou d'un Y dont les extrémités se trouvent au niveau des charnières avant et de la serrure.

Cependant, cette disposition de l'armature a pour inconvénient de concentrer les efforts au niveau de la serrure de sorte que le risque d'ouverture inopinée de la porte en cas de choc frontal subsiste.

Par ailleurs, le document DE 42 36 229 décrit un dispositif de renfort de porte tel que défini dans le préambule de la revendication 1.

La présente invention a pour but d'éliminer les inconvénients ci-dessus en proposant un dispositif qui répartit mieux les efforts en cas de choc frontal.

A cet effet, le dispositif formant renfort de porte pour véhicule automobile de l'invention est défini par la partie caractérisante de la revendication 1.

De préférence, l'une, supérieure, des branches de l'élément de renforcement s'étend sensiblement horizontalement à la partie supérieure du caisson de porte et l'autre branche, inférieure, de l'élément de renforcement s'étend vers la partie inférieure du bord arrière de la porte correspondant à la base de plus grande résistance mécanique du pied milieu du véhicule.

La pointe du V ou l'extrémité du pied du Y de l'élément de renforcement se trouve au niveau de la charnière supérieure avant de la porte.

L'élément de renforcement est configuré de telle sorte que la plus grande partie des efforts résultant d'un choc frontal passe par la branche inférieure de cet élément.

La branche inférieure de l'élément de renforcement a une forme arquée dont la concavité est tournée vers le bas.

L'élément de renforcement est configuré de telle sorte qu'au début d'un choc frontal, le bras inférieur soit sollicité en compression et le bras supérieur en traction puis que le bras inférieur soit sollicité en traction et le bras supérieur en compression.

Avantageusement, l'élément de renforcement est réalisé d'une seule pièce, par exemple par emboutissage.

L'élément de renforcement se trouve entre la doublure de porte et la vitre lorsque celle-ci est en position basse.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en perspective d'un élément de renforcement selon l'invention monté dans la doublure d'une porte avant droite de véhicule automobile.
La figure 2 est une vue en perspective montrant la position relative de l'élément de renforcement et du côté d'habitacle.
La figure 3 est une vue de côté montrant l'élément de renforcement de l'invention dans le côté d'habitacle droit du véhicule, vu de l'intérieur de celui-ci.
La figure 4 est une vue de côté à échelle agrandie, de l'élément de renforcement de la figure 3.

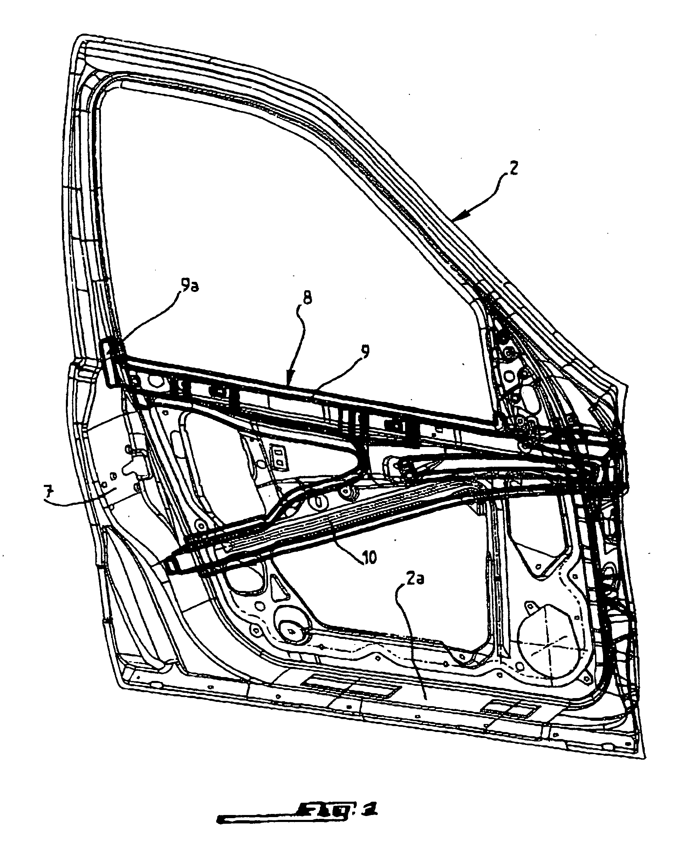

En se reportant aux figures, la référence 1 désigne une partie de carrosserie d'un véhicule automobile, en l'occurence le côté d'habitacle, tandis que la référence 2 désigne une porte avant dans laquelle est monté l'élément de renforcement objet de l'invention. Ce dernier est représenté en traits forts sur les figures 1 à 3 tandis que la porte et le côté d'habitacle sont représentés en traits fins.

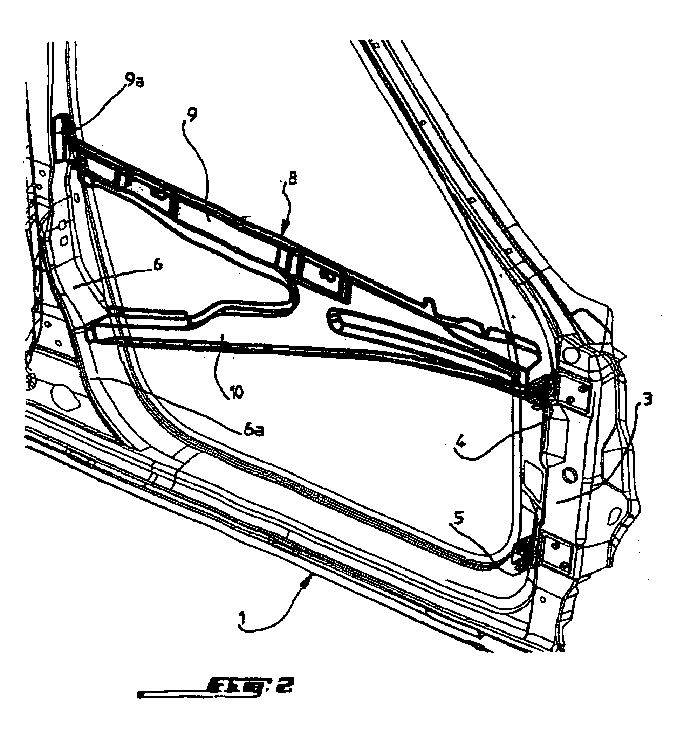

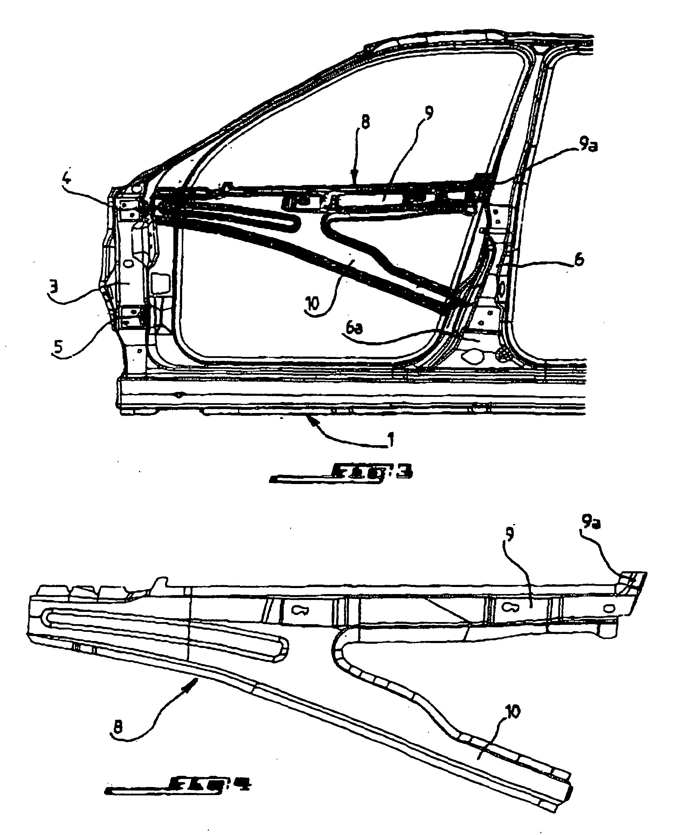

La figure 1 représente l'élément de renforcement monté dans la porte avant droite dont ne voit que la doublure (ou panneau intérieur) 2a vue de l'extérieur du véhicule. Les figures 2 et 3 représentent la position relative de cet élément de renforcement et du côté d'habitacle, la porte n'étant pas représentée sur ces figures. La figure 2 correspond au côté d'habitacle droit du véhicule vu de l'extérieur de celui-ci et la figure 3 à ce même côté d'habitacle, mais vu de l'intérieur.

Chaque porte 2 est montée articulée au pied avant 3 du véhicule par deux charnières avant supérieure 4 et inférieure 5 et peut être verrouillée au pied milieu 6 par une serrure dont l'emplacement est repéré en 7 sur la figure 1.

L'élément de renforcement 8, qui a sensiblement la forme d'un V ou d'un Y, s'étend entre les bords avant et arrière de la porte 2 de façon à transmettre les efforts mécaniques en cas de choc frontal et est de préférence logé entre le panneau intérieur ou doublure de la porte 2 et la vitre (non représentée) en position basse de celle-ci.

Selon l'invention, les deux branches 9, 10 de l'élément de renforcement 8 s'étendent vers le bord arrière de la porte 2 tandis que la pointe du V ou le pied du Y de l'élément 8 se trouve au niveau du bord avant de cette porte.

Plus précisément, l'une, supérieure, 9 des branches de l'élément de renforcement 8 s'étend sensiblement horizontalement à la partie supérieure du caisson de porte et l'autre branche, inférieure, 10 de l'élément de renforcement 8 s'étend vers la partie inférieure du bord arrière de la porte 2 à un niveau correspondant à la base élargie 6a de plus grande résistance mécanique du pied milieu 6 du véhicule. La pointe du V ou l'extrémité du pied du Y de l'élénent de renforcement 8 se trouve au niveau de la charnière avant supérieure 4 de la porte 2.

De préférence, la branche inférieure 10 de l'élément de renforcement 8 a une forme sensiblement arquée dont la concavité est tournée vers le bas.

Par cet élément de renforcement 8, les efforts transmis par la charnière d'articulation 4 lors d'un choc frontal sont divisés avec le bras inférieur 10 plus sollicité que le bras supérieur 9, le bras inférieur 10 dirigeant les efforts vers le bas du pied milieu 6 qui a une meilleure résistance mécanique par sa section de corps creux importante. Quant au bras supérieur 9, il passe le restant des efforts sur le haut du pied milieu 6, ce qui entraîne une sollicitation mécanique moindre de celui-ci à ce niveau.

On notera que, dans l'exemple de réalisation illustré, la serrure se trouve entre les extrémités des deux branches 9 et 10 de l'élément 8, à peu près au milieu entre ces dernières (voir l'emplacement 7 de la serrure sur la figure 1). Le fait que la serrure ne soit pas au niveau de l'une des extrémités des branches de cet élément fait qu'elle n'est pratiquement pas sollicitée et reste intacte en cas de choc frontal, ce qui évite l'ouverture inopinée de la porte.

L'élément de renforcement 8 est de plus configuré comme décrit ci-dessus de sorte qu'au début d'un choc frontal, le bras inférieur 10 soit sollicité en compression et le bras supérieur 9 en traction puis, au fur et à mesure de la déformation, les efforts s'équilibrent et le processus s'inverse, c'est-à-dire que le bras supérieur 9 est sollicité en compression et le bras inférieur 10 en traction.

L'élément de renforcement 8 est réalisé d'une seule pièce, par exemple par emboutissage, et est fixé à l'intérieur de la porte, entre la doublure et la vitre, par exemple par soudage.

Pour optimiser la résistance mécanique propre de l'élément de renforcement 8, les épaisseurs de celui-ci dans les zones fortement sollicitées peuvent être augmentées, la variation des épaisseurs étant obtenue par le procédé de raboutage.

Bien entendu, la forme et l'épaisseur des deux branches de l'élément de renforcement 8 pour arriver au résultat souhaité sont déterminées par calcul.

Le dispositif de l'invention permet donc ae diviser efficacement les efforts transmis de la structure et des charnières avant du véhicule vers la porte avant lors d'un choc frontal sans pratiquement solliciter la serrure et la gâche de la porte, éliminant ainsi tout risque d'ouverture inopinée de la porte.

## Revendications

1. Dispositif formant renfort de porte pour véhicule automobile, comprenant un élément de renforcement (8) ayant sensiblement la forme d'un V ou d'un Y s'étendant entre les bords avant et arrière de la porte (2), les deux branches (9, 10) de l'élément de renforcement (8) s'étendant vers le bord arrière de la porte (2) et la pointe du V ou le pied du Y de l'élément de renforcement (8) se trouvant au niveau du bord avant de la porte (2) , **caractérisé en ce que** l'une, supérieure, (9) des branches de l'élément de renforcement (8) s'étend sensiblement horizontalement à la partie supérieure du caisson de porte et l'autre branche, inférieure, (10) de l'élément de renforcement (8) s'étend vers la partie inférieure du bord arrière de la porte (2) correspondant à la base (6a) de plus grande résistance mécanique du pied milieu (6) du véhicule.

2. Dispositif selon la revendication 1, **caractérisé en ce que** la pointe du V ou l'extrémité du pied du Y de l'élément de renforcement (8) se trouve au niveau de la charnière supérieure avant (4) de la porte (2).

3. Dispositif selon la revendication 1 ou 2, **caractérisé en ce que** l'élément de renforcement (8) est configuré de telle sorte que la plus grande partie des efforts résultant d'un choc frontal passe par la branche inférieure (10) de cet élément.

4. Dispositif selon la revendication 3, **caractérisé en ce que** la branche inférieure (10) de l'élément de renforcement (8) a une forme arquée dont la concavité est tournée vers le bas.

5. Dispositif selon l'une des revendications 1 à 4, **caractérisé en ce que** l'élément de renforcement (8) est configuré de sorte qu'au début d'un choc frontal, le bras inférieur (10) soit sollicité en compression et le bras supérieur (9) en traction puis que le bras inférieur (10) soit sollicité en traction et le bras supérieur (9) en compression.

6. Dispositif selon l'une des revendications précédentes, **caractérisé en ce que** l'élément de renforcement (8) est réalisé d'une seule pièce, par exemple par emboutissage.

7. Dispositif selon l'une des revendications précédentes, **caractérisé en ce que** l'élément de renforcement (8) se trouve entre la doublure de porte et la vitre lorsque celle-ci est en position basse.

## Patentansprüche

1. Vorrichtung, welche eine Verstärkung der Tür für ein Kraftfahrzeug bildet und ein Verstärkungselement (8) umfasst, das im wesentlichen die Form eines V oder Y hat und sich von der vorderen Kante zur hinteren Kante der Tür (2) erstreckt, wobei die beiden Schenkel (9, 10) des Verstärkungselements (8) sich in Richtung auf die hintere Kante der Tür (2) erstrecken und die Spitze des V oder bzw. die Basis des Y des Verstärkungselements (8), das sich auf der Höhe der Vorderkante der Tür (2) befindet, erstrecken, **dadurch gekennzeichnet, dass** der eine obere Schenkel (9) des Verstärkungselements (8) sich im wesentlichen in horizontaler Richtung im oberen Teil des Türkastens erstreckt, und der andere untere Schenkel (10) des Verstärkungselements (8) sich in Richtung auf den unteren Teil der hinteren Kante der Tür (2) erstreckt, was die der Basis (6a) der größten mechanischen Festigkeit der B-Säule des Fahrzeuges entspricht.

2. Vorrichtung nach Anspruch 1, **dadurch gekennzeichnet, dass** die Spitze des V bzw. das Ende der Basis des Y des Verstärkungselements (8) sich auf der Höhe des vorderen oberen Scharniers (4) der Tür (2) befindet.

3. Vorrichtung nach Anspruch 1 oder 2, **dadurch gekennzeichnet, dass** das Verstärkungselement (8) in der Weise ausgestaltet ist, dass der größte Teil der aus einem Frontalzusammenstoss resultierenden Kräfte durch den unteren Schenkel (10) des genannten Elements durchgeleitet wird.

4. Vorrichtung nach Anspruch 3, **dadurch gekennzeichnet, dass** der untere Schenkel (10) des Verstärkungselements (8) eine Bogenform aufweist, deren Konkavität nach unten gerichtet ist.

5. Vorrichtung nach einem der Ansprüche 1 bis 4, **dadurch gekennzeichnet, dass** das Verstärkungselement (8) in der Weise ausgestaltet ist, dass am Beginn des Frontalzusammenstosses der untere Arm (10) durch Druck und der obere Arm (9) durch Zug beansprucht wird und anschließend der untere Arm (10) durch Zug und der obere Arm (9) durch Druck beansprucht wird.

6. Vorrichtung nach einem der vorstehenden Ansprüche, **dadurch gekennzeichnet, dass** das Verstärkungselement (8) zum Beispiel durch Formziehen aus einem Stück hergestellt wird.

7. Vorrichtung nach einem der vorstehenden Ansprüche, **dadurch gekennzeichnet, dass** sich das Verstärkungselement (8) zwischen der Türverkleidung und der sich in der unteren Stellung befindenden Glasscheibe befindet.

## Claims

1. Reinforcement device for a door of a motor vehicle, comprising a substantially V- or Y-shaped reinforcement element (8) extending between the forward and rear edges of the door (2), the two arms (9, 10) of the reinforcement element (8) extending towards the rear edge of the door (2) and the point of the V or foot of the Y of the reinforcement element (8) being located level with the forward edge of the door (2), **characterized in that** one arm of the reinforcement element (8) viz. the upper arm (9) extends substantially horizontally to the upper part of the door frame and the other arm of the reinforcement element (8) viz. the lower arm (10) extends towards the lower part of the rear edge of the door (2) corresponding to the more mechanically robust base (6a) of the central column (6) of the vehicle.

2. Device according to Claim 1, **characterized in that** the point of the V or tip of the foot of the Y of the reinforcement element (8) is located level with the upper front hinge (4) of the door (2).

3. Device according to Claim 1 or Claim 2, **characterized in that** the reinforcement element (8) is configured so that most of the stresses resulting from a frontal impact pass through the lower arm (10) of the said element.

4. Device according to Claim 3, **characterized in that** the lower arm (10) of the reinforcement element (8) has an arched form concave on the downwards side.

5. Device according to any one of Claims 1 to 4, **characterized in that** the reinforcement element (8) is configured so that at the onset of a frontal impact the lower arm (10) is stressed in compression and the upper arm (9) is stressed in tension, and then the lower arm (10) is stressed in tension and the upper arm (9) is stressed in compression.

6. Device according to any one of the preceding claims, **characterized in that** the reinforcement element (8) is made in one piece e.g. by stamping.

7. Device according to any one of the preceding claims, **characterized in that** the reinforcement element (8) is located between the door lining and the window when the window is lowered.
